# FASCICULE DE BREVET EUROPEEN

(11) **EP 0 723 846 B1**
(45) Date de publication et mention de la délivrance du brevet: **07.03.2001**
(21) Numéro de dépôt: 96104851.9
(22) Date de dépôt: 09.07.1992
(51) Int. Cl.: B29C 45/14, B29C 70/76, B60J 10/02, B29C 33/00

(54) **Dispositif pour la fabrication d'un vitrage equipé d'un cadre périphérique à base d'un polymère**
Vorrichtung zum Herstellen einer Glasscheibe mit einem Umfangsrahmen auf Polymerbasis
Device for making glazing with a polymer-based frame

(30) Priorité: 13.07.1991 DE 4123256
(43) Date de publication de la demande: 31.07.1996
(62) Demande divisionnaire de: 92401973.0
(73) Titulaire: SAINT-GOBAIN GLASS FRANCE, 92400 Courbevoie (FR); VEGLA Vereinigte Glaswerke GmbH, 52066 Aachen (DE)
(72) Inventeur: Cordes, Hans, 5100 Aachen (DE); Krumm, Helmut, 5100 Aachen (DE); Schwartz, Ludwig, 5100 Aachen (DE); Kahn, Ilan, 5132 Uebach-Palenberg (DE); Cornils, Gerd, Merzenich-Girbelstrath (DE); Behrend, Ulrich, D-52249 Escheweiler (DE)
(74) Mandataire: Muller, René

(56) Documents cités:
- EP-A- 0 127 546
- EP-A- 0 421 833
- FR-A- 2 247 341
- FR-A- 2 332 409

## Description

L'invention se rapporte à la fabrication d'un vitrage équipé à sa périphérie d'un cadre ou d'une portion de cadre à base de polymère et obtenu essentiellement par extrusion d'un profilé à l'aide d'une buse calibrée directement à la périphérie du vitrage, le dépôt étant effectué soit directement sur le verre soit sur une couche opaque collée sur le verre avec éventuellement en plus l'interposition d'un promoteur d'adhérence.

L'invention se rapporte en particulier à la fabrication d'un vitrage, en particulier d'un vitrage automobile destiné au collage dans la baie d'une carrosserie, équipé d'un profilé périphérique extrudé in situ avec un appendice en polymère qui complète ou supplée le profilé dont il épouse la forme à sa jonction avec lui. L'appendice est situé soit dans la zone de transition entre le début et la fin du cadre extrudé sur le vitrage ou dans les coins du vitrages avec des angles aigus ou avec de faibles rayons. Elle se rapporte également en particulier à la fabrication des vitrages automobiles avec, intégrés à l'appendice, un ou plusieurs des dispositifs appartenant à ceux du groupe comprenant : des signaux lumineux comme les feux « stop », des alimentations électriques comme celles pour le chauffage du vitrage, des alimentations d'antenne, des canalisations pour l'eau ou l'air, des passages d'axes d'essuie-glace et des fixations.

Le brevet US 5 057 265 décrit un procédé du type précédent pour fabriquer un vitrage automobile équipé d'un cadre profilé. Ce procédé connu utilise une buse d'extrusion calibrée qui est positionnée au bord du vitrage puis déplacée tout le long du périmètre où elle distribue le polymère. Lorsque la buse a rejoint son point de départ après avoir parcouru tout le périmètre du vitrage pour y déposer le profilé, on interrompt l'arrivée du polymère et on écarte la buse du vitrage. Cette méthode permet de déposer un cadre à la périphérie du vitrage, notamment un cadre qui possède une lèvre qui s'étend vers l'extérieur. Il suffit pour cela d'utiliser un polymère dont la haute viscosité permet au profilé de demeurer en place après avoir été déposé.

Dans le procédé que l'on vient de décrire, la finition du cadre, c'est-à-dire la zone de liaison entre le début et la fin de l'extrusion est réalisée dans une deuxième phase, après que l'outil a été écarté du verre, grâce à un dispositif de forme appropriée qui vient s'appuyer sur la zone concernée pour lui donner sa forme définitive. Les polymères qui se sont révélés exploitables pour la technique que l'on vient de décrire sont multiples mais on utilise le plus couramment un polyuréthane monocomposant qui polymérise à l'humidité de l'air. Des polyuréthanes bicomposants sont également utilisables.

A la fin du pressage avec l'outil spécial tel qu'il est décrit dans le brevet US 5 057 265 on constate, dans la zone de liaison entre la fin et le début du joint extrudé, qu'un excès de matière subsiste sur la lèvre du joint, excès de matière qu'il faudra couper après polymérisation du joint. Il s'agit là d'une opération supplémentaire qui demande qu'on reprenne le vitrage à la fin de la polymérisation. Par ailleurs, lorsque la quantité de polymère n'est pas en excès comme on vient de le dire mais en léger déficit, il peut se faire que l'on constate un manque de matière en particulier sur la lèvre qui est en général mince, ce qui, dans le cas d'un vitrage automobile, peut être préjudiciable à son fonctionnement ultérieur lorsque le vitrage sera monté dans la voiture.

La technique d'extrusion in situ d'un joint à la périphérie d'un vitrage présente de nombreux avantages en particulier grâce à sa souplesse qui évite l'investissement de moules très chers comme ceux qui sont nécessaires à la technique d'encapsulation du type « reaction injection moulding » (RIM). Cependant, bien que des variations de profilé soient compatibles avec la technique d'extrusion in situ (voir par exemple US 5 108 526 ou EP-A-0 479 677), certaines formes compliquées ne peuvent être réalisées directement, en particulier les formes qui s'étendent notablement au-delà de la périphérie du vitrage. C'est le cas notamment lorsqu'on désire incorporer d'autres fonctions dans le joint car elles occupent souvent une place importante.

Le document EP-A-0 255 218 décrit une technique RIM d'encapsulation de vitrages automobiles dans laquelle on incorpore, lors de l'injection du joint lui-même, des dispositifs divers qui servent à d'autres fonctions que les fonctions habituelles des joints de vitrage automobile. Il s'agit par exemple d'un « spoiler », d'un rétroviseur, d'un feu stop, de conducteurs électriques ou bien destinés à distribuer de l'eau, de l'air... La technique RIM utilisée se fait en une seule étape, les accessoires sont placés à côté du vitrage dans le moule avant le début de l'injection et se trouvent automatiquement insérés dans le joint du vitrage terminé. Le problème de l'insertion d'accessoires à proximité d'un profilé extrudé à la périphérie d'un vitrage est très différent et il est impossible, en particulier pour des raisons de coût ou de nature de polymère, d'envisager d'utiliser la technique d'encapsulation RIM.

Il est connu par le document FR-A-2 332 409 de façonner un coin dans la longueur d'une bande d'étanchéité permettant de former un joint autour d'ouvertures fermées par des portes et des fenêtres. Le profilé tubulaire comporte une partie en U qui vient enchâsser le bord d'une porte. Pour pouvoir suivre la forme du coin, il est nécessaire de couper un morceau de la partie tubulaire. On vient ensuite injecter un matériau de moulage dans un moule en deux parties comportant une cavité dont la forme intérieure est celle à donner au coin.

Le document FR-A-2 247 341 présente une technique voisine. Il s'agit d'un procédé de formage de joints dont la conformation, selon des angles prédéterminés, est combinée avec un épanouissement des lèvres externes d'étanchéité par enserrage co-agissant avec une pression interne, chauffage et apport de matière supplémentaire dans un moule approprié.

L'invention se donne pour tâche de perfectionner le vitrage équipé d'un profilé extrudé in situ en complétant ou suppléant ce profilé par un appendice et d'améliorer le procédé d'extrusion périphérique décrit plus haut de manière à permettre l'obtention d'un joint de forme quelconque en certaines zones du joint périphérique extrudé. Elle se donne également pour tâche de permettre l'obtention d'un joint au profil régulier même dans les zones où l'extrusion ne peut se faire correctement, telles que par exemple dans les zones de raccordement entre le début et la fin du profilé périphérique extrudé in situ.

Ces buts sont atteints par un dispositif selon la revendication 1, qui comporte notamment un élément de moule en deux parties avec une cavité dont la forme correspond à la forme souhaitée pour l'appendice et qui est limitée par au moins un listel d'étanchéité émergeant de la surface du moule.

Avantageusement, la partie supérieure et la partie intérieure de l'élément de moule sont équipées de moyens de chauffage ou de refroidissement. De préférence, un listel d'étanchéité mobile et actionné par un ressort s'appuie sur la surface du vitrage.

Par ailleurs, dans la partie inférieure de l'élément de moule, la limite de l'extrémité de la lèvre du profilé est constituée par l'extrémité d'une plaque coulissante glissant sur la surface plane de la partie inférieure. Avantageusement, la plaque coulissante est équipée de mâchoires qui coopèrent avec un vérin positionnant la plaque coulissante dans une position voisine de la lèvre. S'il s'agit de refaire le profilé extrudé après ablation dans la zone de coin, la partie inférieure de l'élément de moule est de préférence équipée d'une plaque découpée avec un contour qui limite le coin de la lèvre. Alors, les limites de l'extrémité de la lèvre de part et d'autre du contour sont constituées par les extrémités des plaques coulissantes glissant sur la surface plane de la partie inférieure et pouvant prendre appui d'une part sur le bord de la lèvre et d'autre part sur les surfaces d'appui de la plaque découpée.

La technique de l'invention qu'on vient de décrire rapidement, a deux fonctions différentes. D'une part elle permet de corriger les zones où le profilé extrudé est mal conformé, comme par exemple la zone de raccordement entre le début et la fin d'un profilé périphérique, mais elle permet également d'ajouter à un profilé de forme correcte un appendice qui lui ajoute d'autres caractéristiques.

En ce qui concerne la technique de correction d'un profilé défectueux, l'invention permet d'agir alors que le profilé est déjà durci. La méthode est ainsi beaucoup moins délicate que les techniques habituelles qui consistent à modeler le profilé encore mou avec le risque de déformer les zones voisines qui ont pourtant une forme satisfaisante. De plus, si on utilise un polymère qui durcit relativement rapidement à l'intérieur du moule, on cumule l'avantage d'une phase de production très courte avec l'absence de déformation ultérieure du profilé une fois démoulé.

Lorsqu'il s'agit de refaire la liaison entre le début et la fin d'un profilé périphérique extrudé in situ sur le vitrage, il est avantageux de découper la zone concernée après complet durcissement. De cette manière, on obtient des découpes très propres. Mais pour des raisons de production, il peut être intéressant de procéder à l'enlèvement de la zone défectueuse immédiatement après son dépôt, c'est-à-dire avant polymérisation. Une combinaison des deux techniques est également possible : enlèvement de l'essentiel de la matière lorsqu'elle est encore pâteuse et découpe de bavures après polymérisation.

Aussi bien pour les réparations d'un profilé défectueux que pour la création d'un appendice complètement nouveau, il est indispensable que la matière qui va être utilisée soit capable d'assurer une très bonne adhérence durable avec le reste du profilé extrudé. C'est pourquoi on utilise de préférence des systèmes de polymère qui ont la même base chimique, mais qui cependant ont des conditions de durcissement différentes de celles du polymère constituant le profilé extrudé.

Il est possible que la nature du polymère que l'on vient mouler par-dessus le profilé extrudé soit telle que, bien qu'il ait une bonne adhérence sur le polymère constituant le joint, il ait des difficultés à adhérer sur le verre ou sur l'émail du substrat. Dans ce cas, il peut être intéressant de ne pas enlever complètement l'ancien profilé mais de laisser une couche d'une certaine épaisseur en contact avec le verre ou l'émail sur laquelle la matière moulée pourra facilement adhérer.

Dans le cas où l'appendice doit assurer un contact avec le verre plus large que celui du profilé d'origine, il pourra être nécessaire de procéder à un primage spécial de la nouvelle surface de verre ou d'émail destinée à être en contact avec la matière moulée.

Les matériaux compatibles avec le procédé de l'invention sont en général tous les systèmes de polymère prévus pour être injectés, dans la mesure où ils assurent un collage suffisant avec le profilé extrudé déjà en place et éventuellement avec le verre ou l'émail qu'ils recouvrent.

Il est également avantageux que les polymères retenus aient un temps de prise très court. C'est ainsi par exemple que les colles polyuréthanes à deux composants, les « hot melt», les polymères destinés à constituer des couches coulées ou les polymères thermoplastiques de natures diverses conviennent. Il est également important que les polymères retenus aient, en plus des caractéristiques précédentes, la même dureté, la même élasticité et le même aspect que les portions de profilé extrudé in situ voisines.

Il faut en effet que sur le produit fini il soit impossible, en tout cas, difficile de distinguer la transition entre la partie extrudée et la partie moulée a posteriori.

Lorsque le cadre profilé déposé par extrusion sur le vitrage est constitué d'un système de polyuréthane monocomposant qui polymérise à l'humidité, tel que par exemple celui décrit dans le brevet US 3 779 794, alors une composition qui s'est avérée convenir pour le surmoulage d'un appendice sur le profilé précédent est à base d'un système réactif de polyuréthane monocomposant qui polymérise en durcissant sous l'action de la chaleur. On trouve dans le commerce un tel matériau sous la référence « SIKAFLEX 360 HC ».

Jusqu'à présent, on croyait qu'un matériau de ce type ne pouvait polymériser que dans un four avec une circulation d'air chaud et un chauffage à infra-rouge de longueur d'onde moyenne et l'on croyait donc qu'il était nécessaire que la surface du matériau soit exposée à l'atmosphère. Lors des essais qui ont abouti à l'invention, il a été découvert que la polymérisation peut se produire dans un moule chauffé. Il semble même que le durcissement du matériau au contact du moule se fait particulièrement rapidement. Du point de vue de la mise en oeuvre, il est intéressant d'injecter le matériau dans un moule déjà préchauffé car ainsi au début du processus d'injection le matériau a une viscosité qui diminue, ce qui lui permet de pénétrer jusque dans les infractuosités les plus petites du moule. On obtient ainsi une pièce moulée qui n'a pas de bulles ni de manque dans les endroits reculés.

A la fin du remplissage de la cavité du moule, le processus de durcissement du polymère, grâce à la chaleur, commence immédiatement. Avec une température de moule de 140°C par exemple, c'est au bout d'une minute que la prise complète de l'élastomère s'est produite. A ce moment le moule peut être retiré du vitrage.

Le procédé de l'invention n'est pas utilisable seulement pour reconstituer la zone de raccord entre le début et la fin du profilé souhaité à la périphérie d'un vitrage, mais également pour n'importe quelle correction, à n'importe quel endroit du profilé. Chaque fois que l'extrusion directe in situ pose un problème et que la qualité à un endroit donné n'est pas excellente on peut recommencer, par le procédé précédemment décrit, à réaliser le profilé à cet endroit.

Ainsi par exemple lorsqu'un vitrage équipé d'un cadre ou d'une portion de cadre possède dans l'un de ses angles un coin pointu là où il est très difficile d'extruder un profilé avec une section constante, il est très facile d'arrêter l'extrusion dans ce coin ou bien, si elle a déjà été faite, de supprimer le profilé après durcissement de manière à venir refaire par surmoulage la partie du profilé défectueuse.

On peut de cette manière obtenir des formes qu'il aurait été impossible d'obtenir par extrusion directe.

De même l'appendice obtenu par surmoulage peut comporter des éléments étrangers qui seront fixés ainsi définitivement à la périphérie du vitrage. Il peut s'agir d'éléments de montage tels que des cales, des vis, des crochets, etc... Ces éléments sont alors utilisés soit pour la fixation du vitrage dans une baie, c'est le cas éventuellement dans une baie d'automobile, soit pour venir y fixer d'autres objets tels que par exemple un rétroviseur ou bien le support d'un macaron officiel. Mais la technique de l'invention permet également d'intégrer directement des accessoires à la périphérie du vitrage. Ce seront par exemple des signaux lumineux comme des « feux stop », des alimentations électriques comme celles pour le chauffage du vitrage, des alimentations d'antenne, des canalisations pour l'eau ou pour l'air, des passages d'axe d'essuie-glace...

Des exemples de réalisation du dispositif selon l'invention sont présentés à l'aide des figures qui suivent.

Parmi les figures :
- la figure 1 montre la zone de raccordement entre le début et la fin d'un profilé extrudé telle qu'elle est à la sortie de l'extrusion,

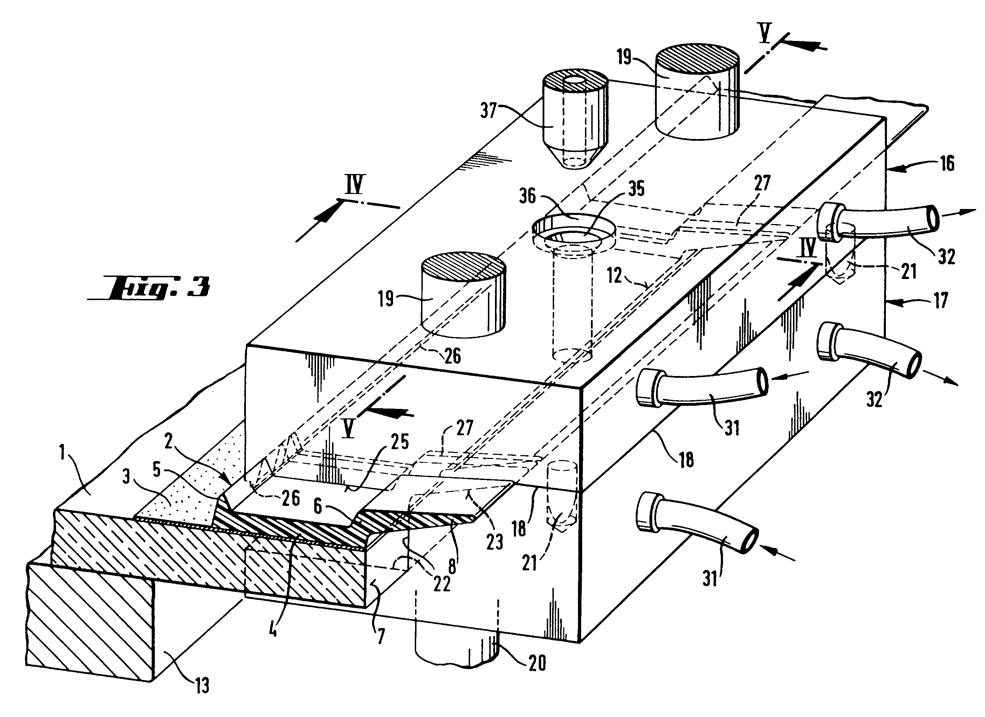

- la figure 2 présente la même zone du vitrage après enlèvement du profilé,
- la figure 3 présente une vue en perspective d'un moule destiné à surmouler la partie du profilé de la zone de transition,
- la figure 4 est une coupe selon IV/IV de la figure 3,
- la figure 5 une coupe selon la ligne V/V de la figure 3,
- la figure 6 montre une variante d'un détail de la figure 4,
- la figure 7 montre une variante du moule pour le surmoulage d'un profilé rectiligne,
- la figure 8 présente une vue en perspective d'un moule destiné à la réalisation d'un profilé de coin. La figure présente la partie inférieure du moule,
- la figure 9 présente, elle, la partie supérieure du moule précédent.

Sur la plupart des figures on a représenté le bord d'une plaque de verre 1 sur la périphérie de laquelle un profilé 2 a été extrudé. Le vitrage 1 est représenté sous forme d'une plaque monolithique. Il est évident qu'il peut s'agir aussi bien d'un vitrage isolant constitué de plaques unitaires séparées par un espace d'air ou d'un autre gaz, que d'un vitrage feuilleté comme ceux qui sont employés pour réaliser des pare-brise d'automobiles.

De tels vitrages destinés à l'automobile sont le plus souvent équipés à leur périphérie d'un dépôt d'émail opaque en forme de cadre 3. La fonction principale de cet émail est de protéger le profilé 2 contre l'action des rayons ultraviolets, mais il permet en même temps de cacher toutes les parties du système de montage du pare-brise. Dans l'exemple retenu, le profilé 2 a une forme dont la section est sensiblement en U avec un fond plat 4 et avec deux nervures destinées à limiter l'expansion de la colle au moment de la pose, nervures internes 5 et nervures externes 6. La nervure externe 6 se prolonge à angle droit au-delà du bord du vitrage 1 par une lèvre sensiblement parallèle au vitrage 8. Lors de la pose cette lèvre 8 se plie et protège le bord du verre au moment où le vitrage est inséré dans la baie de la carrosserie. A la fin de l'insertion le profilé en forme de lèvre 8 sert à centrer le vitrage dans la baie. Dans la voiture une fois terminée, cette lèvre 8, qui se raccorde à la carrosserie, joue un rôle esthétique en permettant de masquer la rainure qui subsiste entre le vitrage et la carrosserie.

Le profilé 2 est obtenu par extrusion directement in situ à la périphérie du vitrage 1. L'extrusion est effectuée directement sur le verre ou bien sur la couche 3 éventuellement après interposition d'une ou de plusieurs couches d'un primaire d'adhérence.

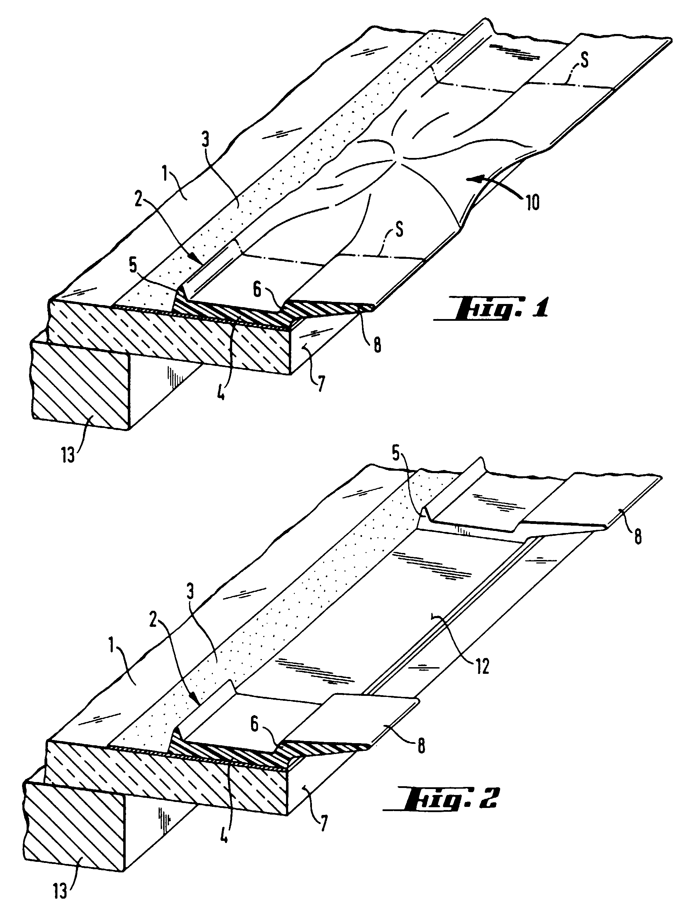

Un tel procédé est décrit par exemple dans le brevet US 5 057 265. Dans le cas où le profilé 2 est déposé sur tout le périmètre du vitrage 1, lorsque la buse d'extrusion parvient à l'endroit où elle avait commencé à faire le dépôt du polymère sur le vitrage, elle est soulevée du verre. A cet endroit tel qu'il est représenté figure 1, on voit une zone d'excroissance 10. En général, il est impossible de laisser cette zone dans l'état où elle est, en particulier parce que la lèvre 8 est tellement déformée qu'elle ne peut plus remplir son office.

Des moyens pour améliorer l'état de cette zone alors que le polymère est encore à l'état plastique ont été décrits par ailleurs. Ce qui va être décrit ici concerne une technique qui s'applique après durcissement du polymère. Lorsque le polymère est suffisamment durci pour que l'on puisse séparer la zone concernée sans déformer définitivement les zones voisines, on procède à la découpe de la zone en question. Cette découpe se fait en deux temps. Tout d'abord on sépare la zone concernée du reste du profilé en traçant avec un cutter deux traits de découpe marqués S sur la figure. Dans un deuxième temps, c'est toute la zone déformée qui est découpée par un trait sensiblement parallèle à la surface du verre. Il est préférable que cette découpe s'effectue à une certaine distance du verre de manière à laisser à la surface une mince couche de l'ancien polymère qui permettra à la nouvelle matière d'adhérer à l'ensemble profilé-verre.

L'opération précédente peut s'effectuer sur le polymère complètement durci à l'aide d'autres outils tels que des rabots, des fraises, etc... L'avantage d'utiliser une fraise est que l'opération peut se faire automatiquement après que le vitrage a été positionné sur un support 13 représenté **figure 1**.

Dans le cas où l'on utilise pour le surmoulage un polymère qui possède une bonne adhérence sur le verre ou sur la couche d'émail qu'il recouvre, alors il est possible d'enlever complètement le polymère du profilé 2 jusque sur la surface du vitrage, mais il est également possible dans ce cas de ne pas recouvrir du tout la zone concernée, c'est-à-dire d'arrêter l'extrusion avant d'atteindre la zone du raccord.

Après que le vitrage a été préparé de la manière qu'on vient de décrire, on va venir déposer un moule à l'endroit concerné et il sera rempli d'un matériau adapté pour réaliser le surmoulage.

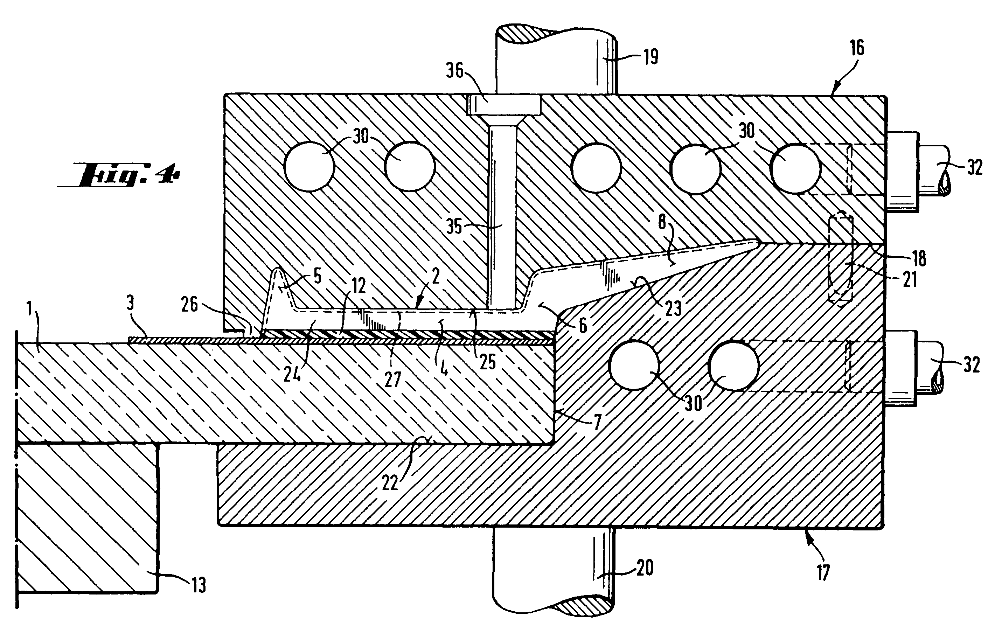

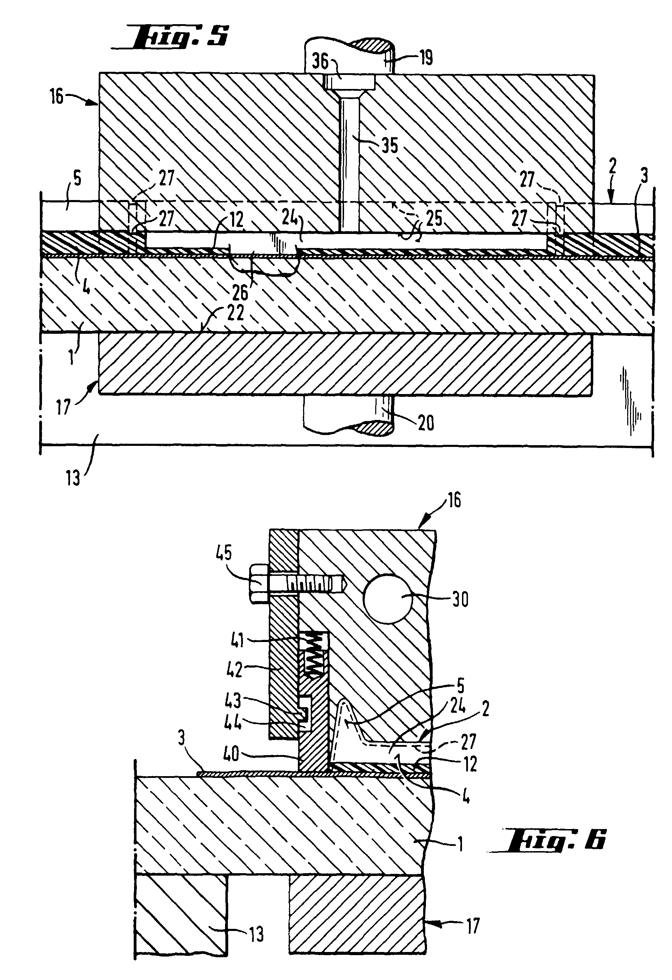

Le moule qui est présenté en détail sur les **figures 3 à 5** est constitué de deux parties : une partie supérieure 16 et une partie inférieure 17, la zone de séparation 18 entre les deux se trouvant au niveau de la lèvre 8. La partie supérieure 16 et la partie inférieure 17 du moule sont à chaque fois fixées sur des supports 19, 20 adaptés. Ces supports, grâce à des mécanismes non représentés, permettent de disposer les deux moitiés du moule sur le bord du vitrage au moment voulu puis de les retirer à la fin de l'opération. Les deux moitiés du moule sont positionnées précisément l'une par rapport à l'autre grâce à un ergot de centrage 21 et à un trou correspondant sur l'autre demi-moule.

Tandis que le demi-moule inférieur 17 possède une zone en retrait 22 destinée à recevoir le vitrage 1 continué par le support de la lèvre 8 jusqu'à la zone de séparation 18, le demi-moule supérieur 16 comporte une cavité 24 dont la surface 25 correspond à la partie supérieure du profilé 2. La cavité 24, s'étend comme la zone de retrait 22 dans la demi-forme inférieure 17, sur toute la longueur du moule, c'est-à-dire qu'elle débouche jusqu'à l'extérieur. De cette manière, le profilé 2 constitue lui-même, tout comme la surface du vitrage, la limite du moule.

Pour compenser d'éventuelles tolérances sur le profilé 2 et/ou des tolérances d'épaisseur sur le vitrage, la partie supérieure du moule 16 comporte sur la surface 25 des listels d'étanchéité 26, 27. Les listels d'étanchéité 27 s'étendent perpendiculairement à la longueur du profilé sur toute la largeur de la surface 25 et ils sont disposés dans la cavité de telle manière qu'ils appuient sur les extrémités entières du profilé 2. Ils permettent ainsi d'assurer une étanchéité très bonne à la limite de la cavité. En effet, ils déforment élastiquement le profilé 2 qui grâce à un effet ressort assure l'étanchéité. Le listel d'étanchéité longitudinal 26 joue le même rôle dans l'autre direction à la limite de la surface du verre. Il est positionné précisément à la limite de la couche inférieure 12 qui est tout ce qui reste de l'ancien profilé et il presse directement sur le verre ou éventuellement sur la couche 3 si elle est présente.

Les deux moitiés du moule 16 et 17 sont équipées de moyens qui leur permettent d'être chauffées de manière contrôlée jusqu'à des températures choisies. On peut par exemple les équiper de résistances électriques et de sondes de température, mais il est également possible d'utiliser un liquide caloporteur. Dans ce cas les deux moitiés de moule 16 et 17 sont équipées de perçages 30 sur lesquels viennent se brancher des tuyaux 31, 32 pour permettre à de l'huile chaude de circuler. Un dispositif de chauffage est nécessaire dans le cas où le matériau destiné au surmoulage est un polyuréthane monocomposant qui polymérise à la chaleur.

La forme supérieure 16 est équipée d'un trou d'injection 35 qui s'élargit en 36. Lorsque le demi-moule supérieur 16 et le demi-moule inférieur 17 ont été placés correctement sur le bord du verre, une buse d'injection 37 est placée dans le trou 36 et la cavité du moule est remplie du polymère liquide. Il est important qu'immédiatement après le remplissage la buse d'injection 37 soit écartée du moule pour éviter qu'elle ne s'échauffe et donc que le polymère ne durcisse à l'intérieur de cette buse 37.

Les deux parties du moule 16, 17 restent en place suffisamment longtemps pour que sous l'action de la chaleur le polymère ait durci jusqu'à ce qu'une déformation de la partie nouvellement moulée ne soit plus possible.

La **figure 6** montre un exemple de réalisation d'un élément du demi-moule supérieur 16. Il s'agit de remplacer le listel d'étanchéité longitudinal 26 qui normalement est fixe par un listel mobile 40. Le listel 40 permet de compenser les tolérances d'épaisseur du vitrage. Il est placé entre la paroi du demi-moule 16 et une plaque de fixation 42 qui est elle-même fixée grâce à une vis 45 sur le moule. Le listel 40 peut se mouvoir verticalement et il est appuyé sur le verre grâce à l'action du ressort 41. Cependant son mouvement est limité grâce à l'ergot 43 qui, placé dans le logement 44, limite son déplacement surtout d'ailleurs vers le bas lorsque le demi-moule supérieur est séparé du verre.

Il est évident que si c'est nécessaire, les surfaces des cavités du moule peuvent être équipées de couches qui empêchent l'adhésion de la matière à surmouler et facilitent le démoulage. Par ailleurs, les surfaces des cavités peuvent être traitées de différentes manières pour leur donner une structure qui permet d'obtenir exactement le même aspect de surface que celui du profilé obtenu par extrusion. Il peut s'agir de polissage, d'attaque chimique, de jet de sable... Au cours de la mise au point du procédé de l'invention, on a constaté qu'un traitement à l'aide de polytétrafluoréthylène PTFE donnait à la fois un bon aspect de surface et également permettait un démoulage facile.

Par ailleurs, il peut être nécessaire, cela dépend de la nature du polymère utilisé pour le surmoulage, de traiter les surfaces aussi bien du profilé 2 existant que du verre ou même de la couche d'émail à l'aide d'un promoteur d'adhérence adapté. Au lieu d'avoir des demi-moules supérieures et inférieurs faits d'une seule pièce comme on vient de le décrire, il est également possible d'équiper les moules, avec leur système de régulation de température, de positionnement... de formes variées et adaptées aux formes des profilés qu'on veut reproduire et qui sont très rapides à changer.

Le dispositif qui vient d'être décrit peut servir aussi bien à la mise en oeuvre d'un polymère thermoplastique. Dans ce cas les perçages 30 des deux demi-moules 16 et 17 sont utilisés pour faire circuler un liquide de refroidissement au lieu d'un liquide pour le chauffage. On peut ainsi obtenir une prise rapide du thermoplastique.

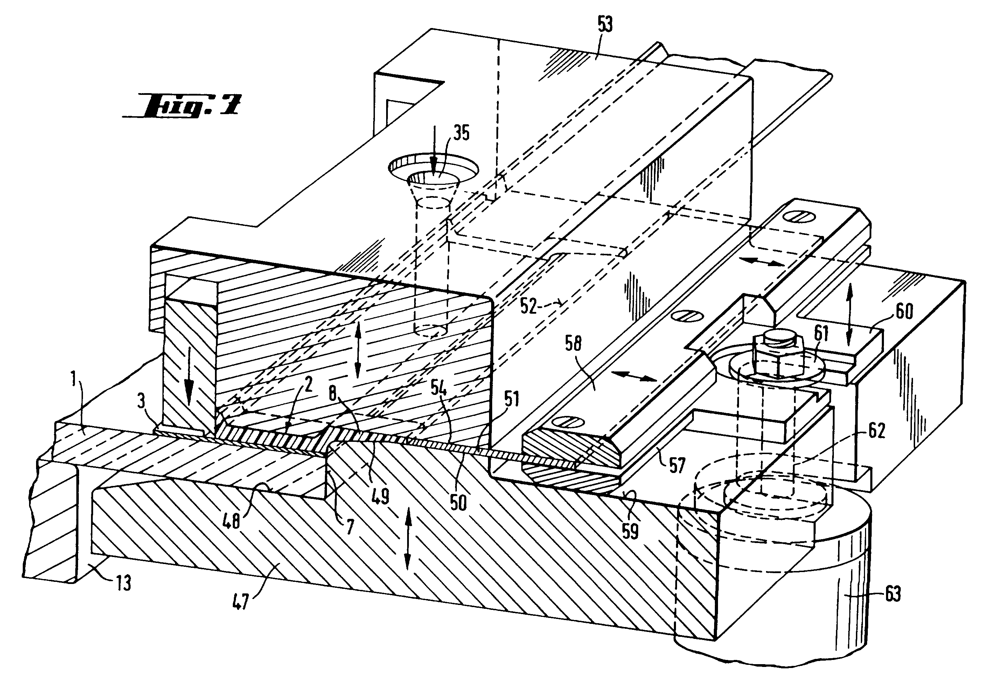

Dans certains cas, il peut être intéressant d'équiper le moule de dispositifs complémentaires tels qu'ils sont représentés sur la **figure 7**. En particulier, dans l'industrie automobile selon les types de véhicules, il est assez courant que la longueur de la lèvre 8 ne soit pas la même pour les différents vitrages équipant un véhicule. En revanche, les autres parties du profilé 2 sont généralement toutes identiques. Il peut donc être intéressant de pouvoir ajuster la longueur de la lèvre 8 en fonction du vitrage que l'on veut traiter.

Une autre raison qui peut rendre nécessaire le réglage de la position de l'extrémité de la lèvre 8 se trouve dans les tolérances de production du joint extrudé. Le dispositif de la **figure 7** doit permettre à chaque fois de venir en référence sur les parties du joint existant.

De nouveau ici le contour de la demi-forme 47 suit le bord inférieur du vitrage, le chant du vitrage et la partie inférieure de la lèvre 8, 49. Cette partie se prolonge par une surface plane 50 sur laquelle une plaque coulissante 51 va pouvoir glisser. L'épaisseur de la plaque 51 correspond à l'épaisseur de la lèvre 8 dans sa partie terminale. L'extrémité avant 52 de la plaque coulissante 51 constitue la limite du moule correspondant au bord de la lèvre 8. Le demi-moule supérieur 53 correspond exactement à ce qui a été décrit jusqu'à présent, il repose simplement grâce à sa surface plane 54 sur la partie supérieure de la plaque coulissante 51.

A l'extérieur du moule, la plaque coulissante 51 est prise dans des mâchoires 57, 58. La mâchoire inférieure 57 glisse sur la surface 59 du demi-moule inférieur 47. Elle se termine par un élément en forme de fourche 60. La fourche 60 permet le maintien en place de l'ensemble mâchoires et plaque coulissante 51, grâce à une rondelle 61 commandée par la tige 62 du vérin 63.

Le procédé pour mettre en oeuvre le dispositif qu'on vient de décrire est le suivant : on met tout d'abord en place la demi-forme inférieure 47. Pour cela, on plaque la surface 48 sur la face inférieure du vitrage et on vient mettre la surface d'appui verticale sur le chant du verre. Le vérin 63 étant libre, on vient, soit à la main, soit automatiquement, mettre la plaque coulissante 51 en contact avec le bord de la lèvre 8 de part et d'autre de la zone à traiter. La plaque coulissante 51 est en effet mobile dans les deux directions du plan. L'opération suivante consiste à agir sur le vérin 63 de manière à figer la position de la plaque coulissante 51 par rapport à la partie inférieure du moule 47. On vient alors placer la partie supérieure 53 du moule à la position précise qui est prévue en référence à la partie inférieure 47. Le moule est maintenant fermé et l'injection peut commencer grâce au trou d'injection 35.

Le principe de la méthode qui vient d'être décrit à l'occasion de la **figure 7** pour une partie des profilés rectilignes est également utilisable dans les angles. Cela est souvent nécessaire, comme on l'a vu, car il est impossible de prendre des virages très serrés avec la buse d'extrusion et on ne peut donc suivre précisément un angle vif du vitrage. Par ailleurs, dans les parties du vitrage avec des rayons de courbure très petits la lèvre périphérique est généralement très difficile à obtenir par extrusion. Il faut en effet doser les quantités respectivement injectées à l'intérieur et à l'extérieur de la courbe avec une très grande précision et l'on voit souvent une lèvre 8 en forme de feston. On doit donc dans ce cas régénérer complètement le joint dans le coin. Pour cela, on utilise un demi-moule inférieur 70 et un demi-moule supérieur 71 qui sont chaque fois adaptés au coin du vitrage 72. Ici, on a gardé les profilés 65 et 66 dans leurs parties rectilignes et on a coupé la partie courbe du coin selon les traits 73 et 74.

Sur le demi-moule inférieur 70 au niveau de la limite inférieure de la lèvre 66 deux surfaces planes de glissement 75 et 76 ont été prévues. Sur la surface 75 on a déposé une plaque coulissante 77 et sur la surface 76 une plaque coulissante 78. Toutes les deux peuvent glisser sur leurs surfaces respectives. Les bords des plaques 79 et 80 respectivement constituent de nouveau les limites de la lèvre 66.

La zone du coin proprement dite de la lèvre 66 est limitée grâce à une plaque fixe qui est placée à la même hauteur que les plaques coulissantes 77 et 78. La plaque découpée 82 possède un contour 85 qui limite le coin de la lèvre 66. Cette plaque comporte des surfaces d'appui 83 et 84. Les plaques coulissantes 77 et 78 sont, comme dans l'exemple précédent, mobiles dans les deux directions du plan. Elles peuvent ainsi s'appuyer à une de leurs extrémités sur le bord de la lèvre qui existe 66 et à l'autre extrémité sur l'une des deux surfaces d'appui 83 et 84, en assurant ainsi la continuité du bord de la lèvre 66. La fixation des plaques coulissantes 77 et 78, après leur positionnement précis qu'on vient de décrire se fait de la même manière que sur la **figure 7** grâce à des vérins qui viennent plaquer les mâchoires sur la partie inférieure du moule.

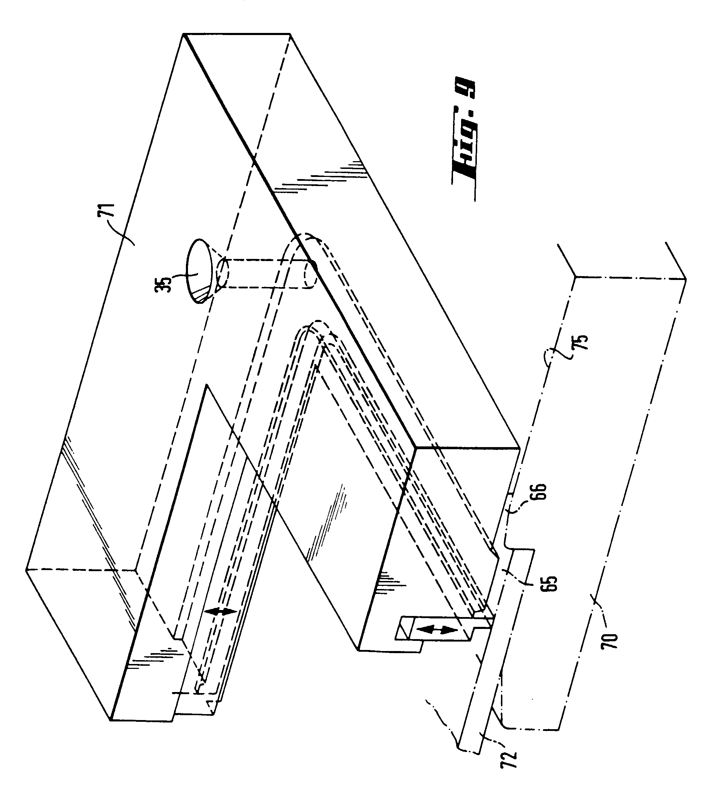

La **figure 9** représente la partie supérieure du moule de coin qui est destinée à être assemblée avec la partie inférieure qu'on vient de décrire. La partie supérieure comporte ici aussi un orifice d'injection 35.

Selon une technique, l'on vient surmouler un appendice sur un profilé extrudé qui est resté en place. Cette technique est particulièrement intéressante dans deux cas. D'abord lorsqu'on a besoin de donner au joint en certains endroits, les coins en particulier, une forme très difficile ou impossible à obtenir par une simple extrusion. Un autre cas intéressant est celui où l'on veut ajouter au vitrage des fonctions nouvelles grâce à un appendice en élastomère qu'on vient greffer sur le joint extrudé, à la périphérie du vitrage. Il s'agit par exemple d'intégrer un connecteur électrique pour le branchement du chauffage de la lunette arrière ou du pare-brise d'une automobile ou bien, l'appendice est destiné à recevoir l'axe de l'essuie-glace de lunette arrière.

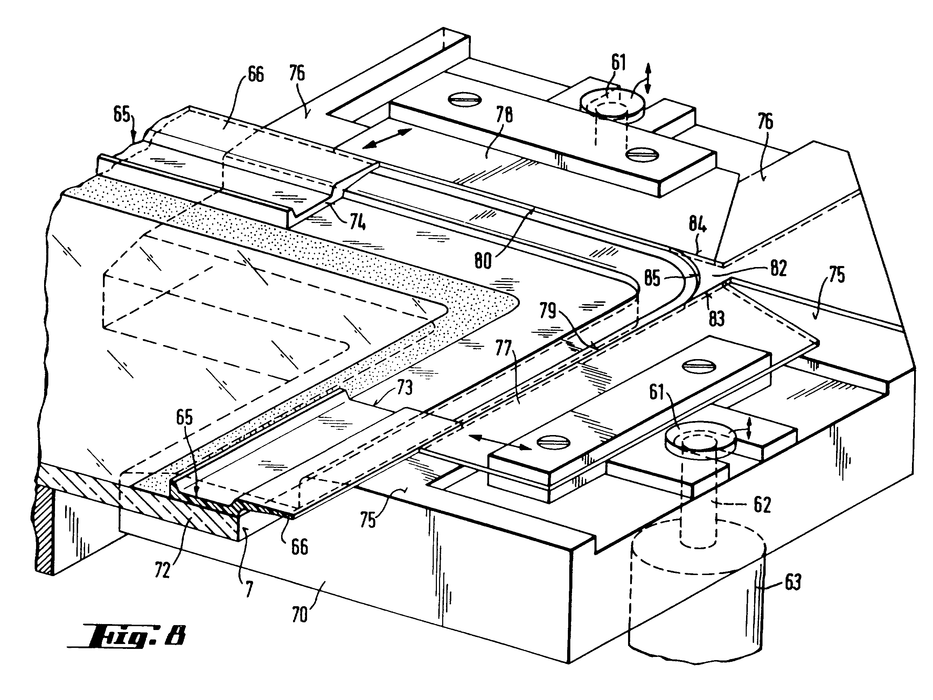

Un cas très difficile à réaliser par simple extrusion in situ du joint périphérique est celui de l'angle droit d'un vitrage lorsqu'on désire que la lèvre, qui assure le centrage du vitrage et qui joue un rôle esthétique très important en masquant l'espace qui subsiste entre le vitrage et la périphérie de la baie, fasse elle aussi un angle d'exactement 90°. Selon une technique différente et plus simple à mettre en oeuvre que celle liée au dispositif illustré figure 8, on ne procède pas à l'ablation du joint dans la zone concernée, on vient simplement greffer un nouvel appendice sur le joint tel qu'il est.

Cette technique de « greffage » peut bénéficier bien entendu des mêmes systèmes de réglage, d'ajustement, de chauffage ou de refroidissement que celle représentée sur les figures 3 à 9.

## Revendications

1. Dispositif pour surmouler un appendice qui supplée ou complète un profilé périphérique extrudé in situ sur un vitrage, en particulier un vitrage automobile, dispositif dans lequel un orifice d'injection (35) communique avec la cavité (24), et qui comporte un élément de moule en deux parties (16, 17 ; 47, 53 ; 70, 71) comportant ladite cavité (24) dont les dimensions correspondent à celles souhaitées pour l'appendice et qui est limitée par au moins un listel d'étanchéité (26, 27, 40) émergeant de la surface (25) du moule.

2. Dispositif selon la revendication 1, ***caractérisé en ce qu'il*** comporte des listels d'étanchéité (26, 27) limitant la cavité (24) de part et d'autre de la zone de l'appendice.

3. Dispositif selon la revendication 1 ou 2, ***caractérisé en ce qu'un*** listel d'étanchéité (40) mobile et actionné par ressort (4) s'appuie sur la surface du vitrage (1) .

4. Dispositif selon l'une des revendications précédentes, ***caractérisé en ce que*** le moule est équipé dans sa partie supérieure (16) et/ou dans sa partie inférieure (17) de moyens (30) de chauffage ou de refroidissement.

5. Dispositif selon l'une des revendications 1 à 4, ***caractérisé en ce que,*** dans la partie inférieure (47) de l'élément de moule, la limite de l'extrémité de la lèvre (8) du profilé (2) est constituée par l'extrémité (52) d'une plaque coulissante (51) glissant sur la surface plane (50) de la partie inférieure (47).

6. Dispositif selon la revendication 5, ***caractérisé en ce que*** la plaque coulissante (51) est équipée de mâchoires (60) qui coopèrent avec un vérin (61, 62, 63) positionnant la plaque coulissante (51) dans une position voisine de la lèvre (8).

7. Dispositif selon l'une des revendications 1 à 6, ***caractérisé en ce que***, pour refaire le profilé extrudé (65) après ablation dans la zone de coin, la partie inférieure (70) de l'élément de moule est équipée d'une plaque découpée (82) avec un contour (85) qui limite le coin de la lèvre (66), ***et en ce que*** les limites de l'extrémité de la lèvre (66) de part et d'autre du contour (85) sont constituées par les extrémités (79, 80) de plaques coulissantes (77, 78) glissant sur une surface plane (75,76) de la partie inférieure (70) et pouvant prendre appui d'une part sur le bord de la lèvre (66) et d'autre part sur des surfaces d'appui (83 ,84) de la plaque découpée (82).

8. Dispositif selon la revendication 7, ***caractérisé en ce que*** les plaques coulissantes (77, 78) sont ajustables pour suivre les bords de la lèvre (66).

9. Dispositif selon l'une des revendications 1 à 8, ***caractérisé en ce que*** les surfaces (23, 25) de la cavité (24) en continuité avec le profilé (2) ont subi un traitement superficiel tel que, attaque chimique, jet de sable ou similaire pour harmoniser l'aspect de la partie moulée nouvelle et celui des profilés extrudés (2) voisins.

10. Dispositif selon l'une des revendications 1 à 9, ***caractérisé en ce que*** les surfaces internes de la cavité (24) sont revêtues d'une couche anti-adhésive telle qu'en polytétrafluoréthylène (PTFE).

## Patentansprüche

1. Vorrichtung zum Aufspritzen eines Ansatzes, der ein in situ an ein Fenster, insbesondere ein Autofenster, extrudiertes Umfangsprofil ersetzt oder vervollständigt, wobei in der Vorrichtung eine Einspritzöffnung (35) mit dem Hohlraum (24) in Verbindung steht und die Vorrichtung ein aus zwei Teilen (16, 17; 47, 53; 70, 71) bestehendes Werkzeugelement aufweist, das den Hohlraum (24) enthält, dessen Abmessungen den für den Ansatz gewünschten Abmessungen entsprechen und der durch mindestens eine aus der Fläche (25) des Werkzeugs austretende Dichtungsleiste (26, 27, 40) begrenzt ist.

2. Vorrichtung nach Anspruch 1, dadurch gekennzeichnet, daß sie den Hohlraum (24) auf beiden Seiten des Ansatzbereichs begrenzende Dichtungsleisten (26, 27) aufweist.

3. Vorrichtung nach Anspruch 1 oder 2, dadurch gekennzeichnet, daß eine bewegliche und durch eine Feder (4) betätigte Dichtungsleiste (40) an der Fläche des Fensters (1) anliegt.

4. Vorrichtung nach einem der vorhergehenden Ansprüche, dadurch gekennzeichnet, daß das Werkzeug in seinem oberen Teil (16) und/oder in seinem unteren Teil (17) mit Heiz- oder Abkühlungsmitteln (30) versehen ist.

5. Vorrichtung nach einem der Ansprüche 1 bis 4, dadurch gekennzeichnet, daß im unteren Teil (47) des Werkzeugelements die Grenze des Endes der Lippe (8) des Profils (2) durch das Ende (52) einer verschiebbaren Platte (51) gebildet wird, die über die ebene Fläche (50) des unteren Teils (47) gleitet.

6. Vorrichtung nach Anspruch 5, dadurch gekennzeichnet, daß die verschiebbare Platte (51) mit Klemmbacken (60) versehen ist, die mit einem Zylinder (61, 62, 63) zusammenwirken, der die verschiebbare Platte (51) in eine der Lippe (8) benachbarte Position positioniert.

7. Vorrichtung nach einem der Ansprüche 1 bis 6, dadurch gekennzeichnet, daß zur Wiederherstellung des extrudierten Profils (65) nach der Abtrennung im Eckbereich der untere Teil (70) des Werkzeugelements mit einer abgeschnittenen Platte (82) mit einer Kontur (85), die die Ecke der Lippe (66) begrenzt, ausgestattet ist und daß die Grenzen des Endes der Lippe (66) auf beiden Seiten der Kontur (85) durch die Enden (79, 80) von über eine ebene Fläche (75, 76) des unteren Teils (70) gleitenden verschiebbaren Platten (77, 78) gebildet werden, die einerseits am Rand der Lippe (66) und andererseits an Stützflächen (83, 84) der abgeschnittenen Platte (82) anliegen können.

8. Vorrichtung nach Anspruch 7, dadurch gekennzeichnete, daß die verschiebbaren Platten (77, 78) so verstellbar sind, daß sie den Rändern der Lippe (66) folgen.

9. Vorrichtung nach einem der Ansprüche 1 bis 8, dadurch gekennzeichnet, daß die Flächen (23, 25) des Hohlraums (24), die mit dem Profil (2) durchgehend sind, einer Oberflächenbehandlung, wie zum Beispiel einer Ätzung, einem Sandstrahlen o.ä., unterzogen wurden, um das Aussehen des neuen Formteils und das der benachbarten extrudierten Profile (2) in Einklang zu bringen.

10. Vorrichtung nach einem der Ansprüche 1 bis 9, dadurch gekennzeichnet, daß die Innenflächen des Hohlraums (24) mit einer Antihaftschicht, wie zum Beispiel Polytetrafluorethylen (PTFE), überzogen sind.

## Claims

1. Device for overmoulding an appendage which supplements or complements a peripheral profile extruded *in situ* onto a glazing pane, particularly a motor-vehicle window, in which device an injection orifice (35) communicates with the cavity (24) and which comprises a two-part mould element (16, 17; 47, 53; 70, 71) which includes the said cavity (24) which has the dimensions corresponding to those desired for the appendage and which is bounded by at least one sealing strip (26, 27, 40) emerging from the surface (25) of the mould.

2. Device according to Claim 1, characterized in that it includes sealing strips (26, 27) bounding the cavity (24) on each side of the zone of the appendage.

3. Device according to Claim 1 or 2, characterized in that a sealing strip (40), which can move and is actuated by a spring (4), bears on the surface of the glazing pane (1).

4. Device according to one of the preceding claims, characterized in that the mould is provided in its upper part (16) and/or in its lower part (17) with heating or cooling means (30).

5. Device according to one of Claims 1 to 4, characterized in that, in the lower part (47) of the mould element, the bound of the end of the lip (8) of the profile (2) consists of the end (52) of a sliding plate (51) which slides over the plane surface (50) of the lower part (47).

6. Device according to Claim 5, characterized in that the sliding plate (51) is provided with jaws (60) which interact with a ram (61, 62, 63) positioning the sliding plate (51) in a position close to the lip (8).

7. Device according to one of Claims 1 to 6, characterized in that, in order to repair the extruded profile (65) after ablation in the corner region, the lower part (70) of the mould element is provided with a cut plate (82) with an outline (85) which bounds the corner of the lip (66) and in that the bounds of the end of the lip (66) on each side of the outline (85) consist of the ends (79, 80) of sliding plates (77, 78) which slide over a plane surface (75, 76) of the lower part (70) and are able to bear, on one side, on the edge of the lip (66) and, on the other side, on bearing surfaces (83, 84) of the cut plate (82).

8. Device according to Claim 7, characterized in that the sliding plates (77, 78) are adjustable so as to follow the edges of the lip (66).

9. Device according to one of Claims 1 to 8, characterized in that the surfaces (23, 25) of the cavity (24) which are continuous with the profile (2) have undergone a surface treatment, such as etching, sandblasting or the like, in order to harmonize the appearance of the new moulded part with that of the adjacent extruded profiles (2).

10. Device according to one of Claims 1 to 9, characterized in that the internal surfaces of the cavity (24) are coated with a non-stick layer such as one made of polytetrafluoroethylene (PTFE).
